# EUROPÄISCHE PATENTSCHRIFT

(11) **EP 1 526 747 B1**
(45) Veröffentlichungstag und Bekanntmachung des Hinweises auf die Patenterteilung: **07.05.2014**
(21) Anmeldenummer: 05100360.6
(22) Anmeldetag: 14.10.1997
(51) Int. Cl.: B60R 25/10, H04W 88/02

(54) **Rundfunkempfangseinrichtung und Mobilfunkeinrichtung mit Notrufempfang**
Broadcast receiver and mobile device for receiving emergency calls
Récepteur de radiodiffusion et appareil mobile pour la réception d'appels de secours

(30) Priorität: 15.10.1996 DE 19642515
(43) Veröffentlichungstag der Anmeldung: 27.04.2005
(62) Teilanmeldung aus: 97945748.8
(73) Patentinhaber: ROBERT BOSCH GMBH, 70442 Stuttgart (DE)
(72) Erfinder: Weigl, Andreas, 76351 Linkenheim-Hochstetten (DE); Weiss, Karl-Ernst, 76275 Ettlingen (DE); Diehl, Udo, 70195 Stuttgart (DE); Haas, Hardy, 71254 Ditzingen-Schoeckingen (DE); Schramm, Dieter, 70469 Stuttgart (DE); Bochmann, Harald, 30419 Hannover (DE); Kaiser, Karl-Heinz, 71732 Tamm (DE); Diebold, Bernd, 08720 Villafranca Del Penedes (ES); Keutmann, Christoph, 53757 St. Augustin (DE)

(56) Entgegenhaltungen:
- EP-A- 0 290 725
- WO-A-93/23766
- WO-A-96/08933
- US-A- 4 825 457
- US-A- 4 873 711

## Beschreibung

### Stand der Technik

Die Erfindung geht von einer Rundfunkeinrichtung und einer Mobilfunkeinrichtung nach der Gattung der unabhängigen Patentansprüche aus.

Aus der EP 0 290 725 B1 ist ein Verfahren zum Absetzen eines Notrufs bekannt, bei dem eine mobile Funkstation eine Notruftaste aufweist. Bei der Betätigung der Notruftaste werden automatisch ein Notrufsignal und die Kennung der mobilen Funkstation ausgesendet. Dabei kann auch eine digital gespeicherte Zusatzinformation, wie zum Beispiel "Meldung eines Unfalls", ausgesendet werden. Die Zusatzinformationen können vorbereitete Texte sein, Angaben über den zurückgelegten Weg der mobilen Funkstation sowie die Uhrzeit der Aussendung sein. Die Übertragung der Ortsinformation erfolgt vorzugsweise mittels Datentelegrammen mit einem selbstkorrigierenden Code, zum Beispiel einem Interleaving-Code. Um die Übertragungssicherheit zu erhöhen, sendet die mobile Funkstation die Ortsinformation mehrmals nacheinander aus. Eine zentrale Auswertestelle bestätigt dann den ordnungsgemäßen Empfang der Ortsinformation durch ein Quittungssignal. Sobald die mobile Funkstation das Quittungssignal empfangen und augewertet hat, wird die Folge von gleichen Ortsinformationen unterbrochen. Als Quittungssignal wird vorzugsweise das von der zentralen Auswertestelle empfangene und die Ortsinformation enthaltende Datentelegramm ausgesendet, wobei das Quittungssignal auf einer Anzeigevorrichtung der mobilen Funkstation angezeigt und/oder mittels eines Druckers ausgedruckt wird.

Aus US-A-4,873,711 ist ein mobiler Sende-Empfänger bekannt, der in einem Fahrzeug montiert ist. Der Sende-Empfänger kommuniziert über eine zweite mobile Einheit mit einer portablen Einheit kurzer Reichweite. Die portable Einheit ermöglicht es einem entfernt positionierten Benutzer, Meldungen an eine Basisstation zu übertragen. Die portable und die zweite mobile Einheit kommunizieren über ein erstes Frequenzpaar miteinander. Der mobile Sende-Empfänger im Fahrzeug und die Basisstation kommunizieren miteinander über ein zweites Paar unterschiedlicher Frequenzen. Das in der zweiten mobilen Einheit empfangene Signal wird in einem Mikroprozessor dekodiert. Eine erste mobile Einheit des Sendeempfängers sendet daraufhin ein Signal mit einem vorgegebenen Code zur Basisstation, um die Basisstation bspw. über einen Notfall zu informieren. Die Informationen können in der Basisstation weiter ausgewertet werden.

Der erfindungsgemäße Rundfunkempfänger mit den Merkmalen des Anspruchs 1 hat den Vorteil, dass er zusätzlich zum normalen Rundfunkempfangsbetrieb in einem Rundfunkfrequenzbereich abgestrahlte Notrufsignale detektieren und weiterleiten kann. Dadurch wird der Rundfunkempfänger ohne nennenswerten Mehraufwand zu einer Relais-Station erweitert.

Durch die in den Ansprüchen 2 bis 4 aufgeführten Maßnahmen sind vorteilhafte Weiterbildungen und Verbesserungen des im Anspruch 1 angegebenen Rundfunkempfängers möglich.

Vorteilhaft ist dabei das Vorsehen eines Ortungssystems im Bereich des Rundfunkempfängers und die Positionsabgabe des Ortungssystems, wenn das empfangene Funksignal keine Positionsangabe enthält. Auf diese Weise kann beispielsweise ein Notruf auch in diesem Fall zumindest ungefähr lokalisiert werden.

Vorteilhaft ist weiterhin, dass die Funksignale solange weitergeleitet werden, bis der Empfänger ein Quittierungssignal detektiert. Auf diese Weise wird sichergestellt, dass die Funksignale auch von dem zentralen Empfänger empfangen wurden.

Die erfindungsgemäße Mobilfunkeinrichtung mit den Merkmalen des Anspruchs 5 hat den Vorteil, dass sie zur Weiterleitung beispielsweise eines Notrufssignals verwendet werden kann. Auf diese Weise erfolgt ohne nennenswerten Zusatzaufwand eine Erweiterung der Funktionalität der Mobilfunkeinrichtung.

Durch die in den Ansprüchen 6 bis 7 aufgeführten Maßnahmen sind vorteilhafte Weiterbildungen und Verbesserungen der im Anspruch 5 eingegebenen Mobilfunkeinrichtung möglich.

Dabei ist es vorteilhaft, dass die Mobilfunkeinrichtung zusammen mit den Informationen der empfangenen Funksignale eine Positionsangabe abstrahlt, die die Funkzelle kennzeichnet, in der sich die Mobilfunkeinrichtung befindet. Auf diese Weise kann bei Weiterleitung eines Notrufssignals, das von der Mobilfunkeinrichtung ohne Positionsangabe empfangen wurde, dennoch eine zumindest ungefähre Lokalisierung des Notrufs erfolgen.

Vorteilhaft ist auch, dass die Mobilfunkeinrichtung die Informationen der empfangenen Funksignale zu vorgegebenen Zeiten solange abstrahlt, bis sie ein Quittierungssignal detektiert. Auf diese Weise wird sichergestellt, dass die weitergeleiteten Funksignale auch tatsächlich bei der zentralen Empfangsanlage empfangen wurden.

Ein weiterer Vorteil besteht auch in der Wahl der Empfangseinrichtung der Mobilfunkeinrichtung zum Empfang der Funksignale als funkgesteuerte Zentralverriegelung, als Rundfunkempfänger und/oder als Mobilfunkempfänger. Auf diese Weise besteht eine große Flexibilität bei der Wahl des Funknetzes für die von der Sendeeinrichtung abzustrahlenden Funksignale und eine hohe Wahrscheinlichkeit dafür, dass die von der Sendeeinrichtung abgestrahlten Funksignale aufgrund der weiten Verbreitung der genannten Empfangseinrichtungen von einer Mobilfunkeinrichtung weitergeleitet werden.

### Zeichnung

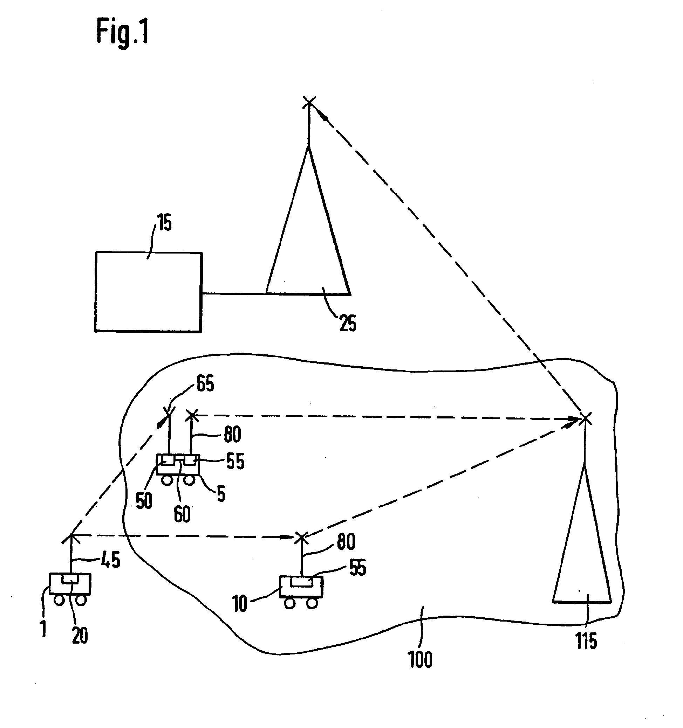

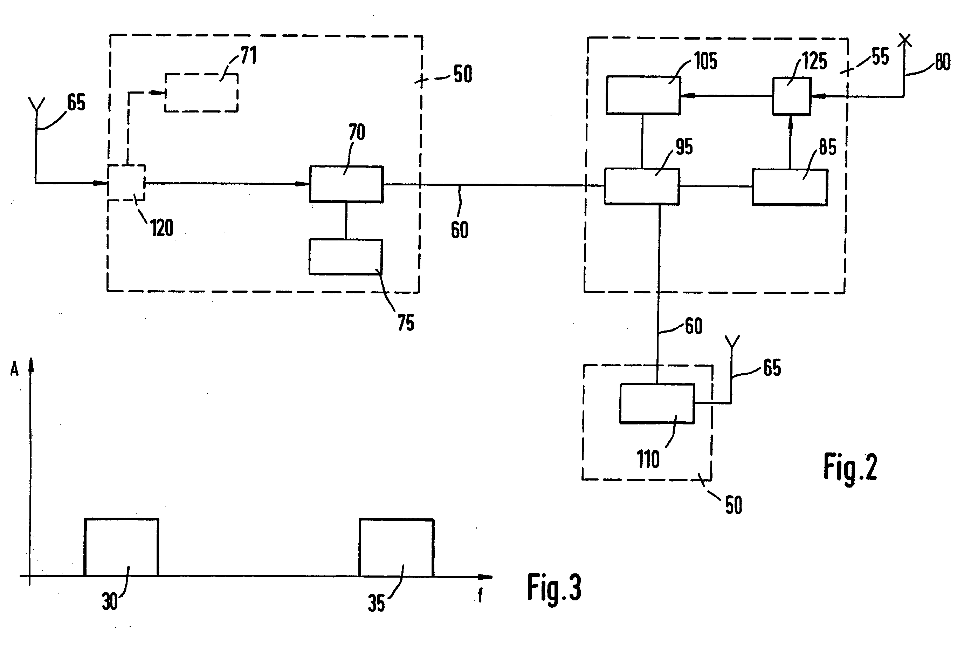

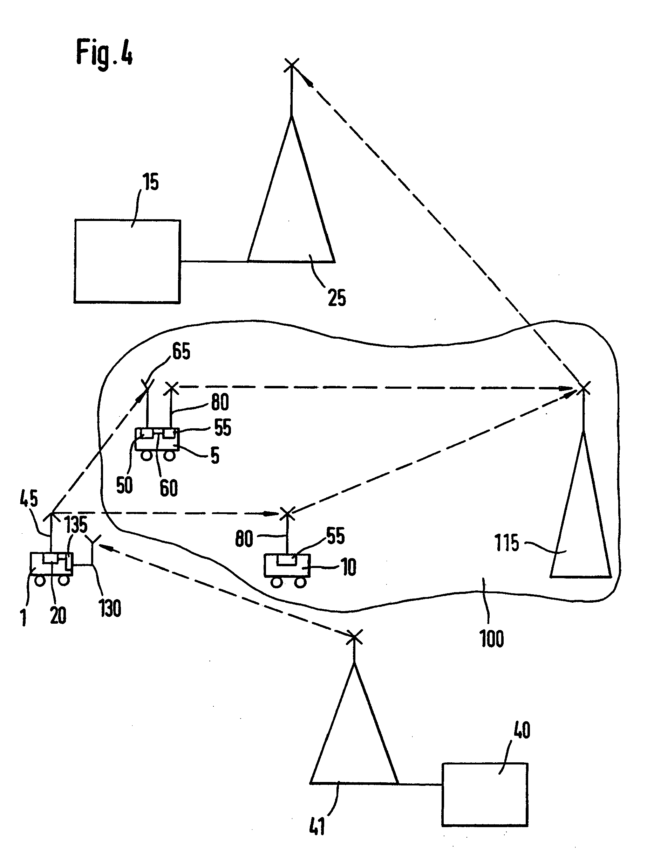

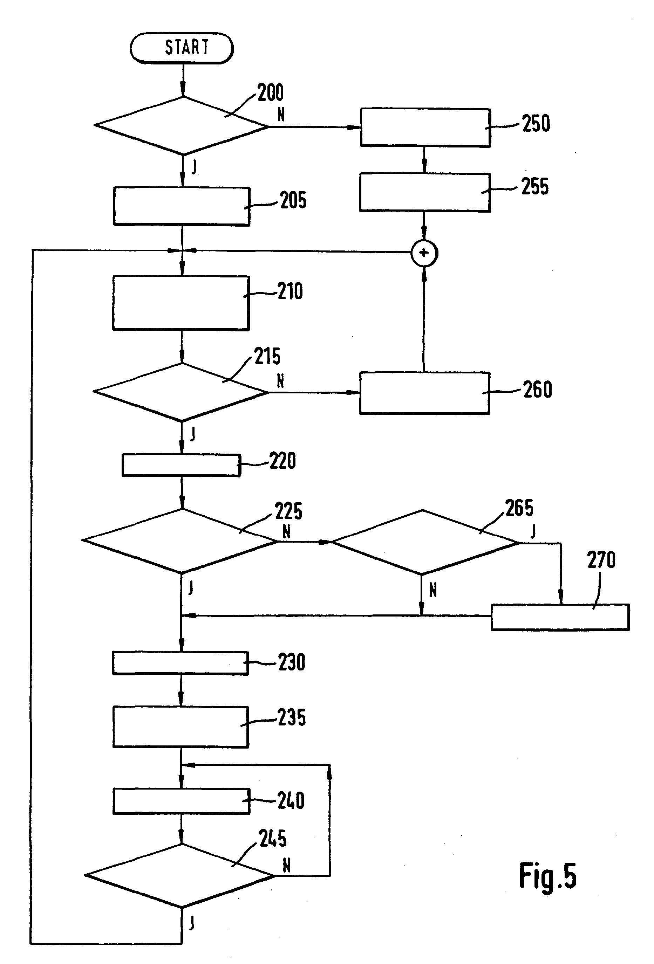

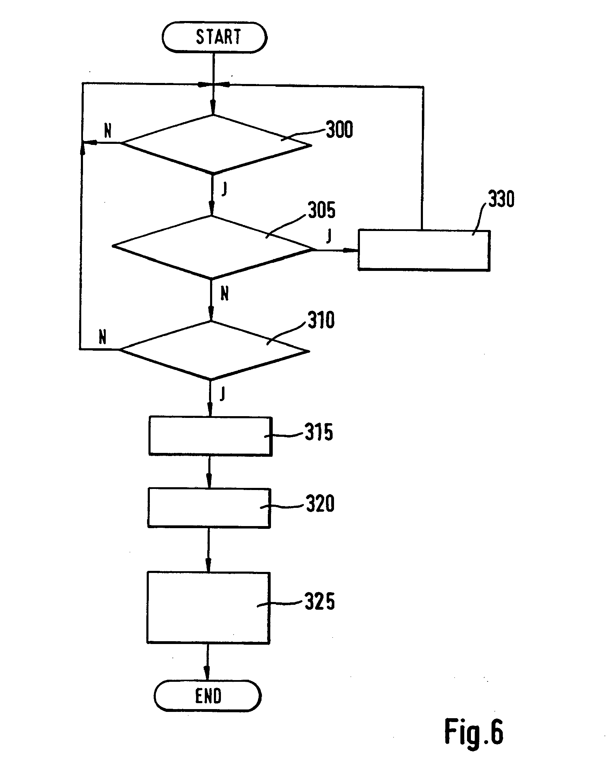

Ein Ausführungsbeispiel der Erfindung ist in der Zeichnung dargestellt und in der nachfolgenden Beschreibung näher erläutert. Es zeigen Figur 1 eine Übertragungsstrecke von einer mobilen Sendeeinrichtung über mobile und feste Relaisstationen an einen zentralen Empfänger, Figur 2 das Blockschaltbild eines Rundfunkempfängers und einer funkgesteuerten Zentralverriegelung, die an eine Mobilfunkeinrichtung angeschlossen sind, Figur 3 die spektrale Aufteilung des Frequenzbereichs der von der Sendeeinrichtung augestrahlten und des Frequenzbereichs der von der Sende-/Empfangseinrichtung weitergeleiteten Funksignale, Figur 4 eine Übertragungsstrecke gemäß Figur 1 mit einer zusätzlichen Leitzentrale, Figur 5 den Ablaufplan für die Detektion von Notrufsignalen in einem Rundfunkempfänger und Figur 6 einen Ablaufplan für die Detektion von Notrufsignalen in einer funkgesteuerten Zentralverriegelung.

### Beschreibung des Ausführungsbeispiels

In Figur 1 kennzeichnet 1 eine erste, als Fahrzeug ausgebildete mobile Station mit einer eingebauten Sendeeinrichtung 20, die mit einer Sendeantenne 45 verbunden ist. Von der Sendeeinrichtung 20 werden über die Sendeantenne 45 Funksignale abgestrahlt, deren Übertragungsweg in Figur 1 gestrichelt dargestellt ist. In einer Funkzelle 100 eines Mobilfunknetzes, die von einer Feststation 115 versorgt wird, befinden sich eine zweite und eine dritte, jeweils als Fahrzeug ausgebildete mobile Station 5 und 10. Die zweite mobile Station 5 weist eine Empfangseinrichtung 50 und eine mit der Empfangseinrichtung 50 über eine Datenleitung 60 verbundene Mobilfunkeinrichtung 55 auf. Funksignale von der Sendeeinrichtung 20 werden von der Sendeantenne 45 abgestrahlt und von der Empfangsantenne 65 der Empfangseinrichtung 50 empfangen. Von der Sende-/Empfangsantenne 80 der Mobilfunkeinrichtung 55 werden weitere Funksignale an die Feststation 115 abgestrahlt. Die dritte mobile Station 10 weist eine Mobilfunkeinrichtung 55 mit einer Sende-/Empfangsantenne 80 auf, die ebenfalls Funksignale von der Sendeeinrichtung 20 empfängt und weitere Funksignale an die Feststation 115 abstrahlt. Von der Feststation 115 werden die weiteren Funksignale an eine an einem zentralen Punkt befmdliche Empfangsanlage 25, gegebenenfalls über weitere Feststationen weitergeleitet. Die an dem zentralen Punkt befindlichen Empfangsanlage 25 ist mit einer Zentrale 15 verbunden. Es ist auch denkbar, dass die zweite und/oder die dritte Station 5 und 10 nicht mobil sondern fest sind. Auch die erste Station 1 kann eine Feststation sein.

In Figur 2 sind die Empfangseinrichtung 50 und die Mobilfunkeinrichtung 55 anhand eines Blockschaltbildes genauer dargestellt. Über die Empfangsantenne 65 wird ein empfangenes Funk- und/oder Rundfunksignal der Empfangseinrichtung 50 zugeführt. In Figur 2 sind zwei Empfangsantennen 65 und zwei Empfangseinrichtungen 50 dargestellt. Dabei handelt es sich zum einen um die Empfangseinrichtung 50 einer funkgesteuerten Zentralverriegelung 110 und zum anderen um die Empfangseinrichtung 50 eines Rundfunkempfängers 70. Im Falle des Rundfunkempfängers 70 wird das empfangene Funksignal entweder direkt dem Rundfunkempfänger 70 oder, falls ein zweiter Rundfunkempfänger 71 in der Empfangseinrichtung 50 vorhanden ist, über eine in diesem Fall vorhandene Frequenzweiche 120 dem ersten oder dem zweiten Rundfunkempfänger 70 bzw. 71 zugeführt. Da der zweite Rundfunkempfänger 71 mit der Frequenzweiche 120 optional in die Empfangseinrichtung 50 eingebaut ist, sind beide Elemente in Figur 2 gestrichelt dargestellt. In der Empfangseinrichtung 50 mit dem Rundfunkempfänger 70 ist außerdem ein mit dem Rundfunkempfänger 70 verbundenes Ortungssystem 75 angeordnet. Der Rundfunkempfänger 70 und die funkgesteuerte Zentralverriegelung 110 sind jeweils über eine Datenleitung 60 mit einem Codierer 95 der Mobilfunkeinrichtung 55 verbunden. Der Codierer 95 ist sowohl an einen Mobilfunkempfänger 105, als auch an einen Sender 85 der Mobilfunkeinrichtung 55 angeschlossen. Über eine Antennenweiche 125 ist der Mobilfunkempfänger 105 und der Sender 85 an die Sende-/Empfangsantenne 80 der Mobilfunkeinrichtung 55 angeschlossen.

In Figur 3 ist die spektrale Aufteilung der ersten Frequenzlage 30 für die von der Sendeeinrichtung 20 abgestrahlten Funksignale und der zweiten Frequenzlage 35 der von der Sende-/Empfangseinrichtung 50, 55 weitergeleiteten Funksignale dargestellt. Dabei wird deutlich, dass beide Frequenzlagen durch einen Frequenzabstand voneinander getrennt sind und die erste Frequenzlage 30 kleinere Frequenzen umfasst als die zweite Frequenzlage 35.

Die zweite und die dritte mobile Station 5 und 10 dienen als Relais-Stationen zur Weiterleitung von Funksignalen, die von der ersten mobilen Station 1 abgestrahlt werden, über die Feststation 115 an die an dem zentralen Punkt befindliche Empfangsanlage 25. Ein solches Verfahren zur Übertragung von Funksignalen ist besonders dann von großer Bedeutung, wenn es sich bei den von der ersten mobilen Station 1 abgestrahlten Funksignalen um solche mit schwacher Leistung handelt. Dies ist beispielsweise dann der Fall, wenn die erste mobile Station 1 verunfallt, eine Panne hat oder einem Überfall ausgesetzt ist. In diesen Fällen können automatisch oder manuell ausgelöste Notsignale von der Sendeeinrichtung 20 über die Sendeantenne 45 abgestrahlt werden. Speziell bei einem Unfall kann die Abstrahlung von Funksignalen durch Sensorsignale aktiviert werden, die durch einen Airbagsensor, einen Gurtsensor, einen Crashsensor oder dergleichen automatisch ausgelöst werden. Wenn nun in den beschriebenen Fällen die im beschriebenen Ausführungsbeispiel als Außenantenne ausgeführte Sendeantenne 45 der Sendeeinrichtung 20 beschädigt wurde, die Sendeeinrichtung 20 insgesamt nicht mehr leistungsstark genug ist oder aufgrund einer ungünstigen geographischen Gegebenheit die an dem zentralen Punkt angeordnete Empfangsanlage 25 zur Einleitung von Hilfsmaßnahmen über die Zentrale 15 nicht erreicht werden kann, so kann der schwache Notruf mittels der in der Nähe der ersten mobilen Station 1 befindlichen zweiten und/oder dritten mobilen Station 5 und 10 empfangen und über das Mobilfunknetz weitergeleitet werden. Anstelle des Mobilfunknetzes kann ein beliebiges anderes Funknetz verwendet werden, wenn die zweite und/oder die dritte mobile Station 5 und 10 mit entsprechenden Funkeinrichtungen ausgerüstet sind. In dem beschriebenen Ausführungsbeispiel werden die Notruffunksignale in einem Rundfunkfrequenzband, beispielsweise im UKW-Rundfunkband und/oder im für fahrzeugtypische Fernsteuerfrequenzen zugelassenen Bereich, beispielsweise für die funkgesteuerte Zentralverriegelung 110 von der Sendeeinrichtung 20 abgestrahlt. Denkbar ist auch die Abstrahlung der Notrufsignale in einem Funknetz, beispielsweise dem Mobilfunknetz. Wird ein im Rundfunkfrequenzbereich von der Sendeeinrichtung 20 abgestrahltes Notrufsignal von einem Rundfunkempfänger der zweiten mobilen Station 5 empfangen, so werden die Funksignale über die Mobilfunkeinrichtung 55 im Mobilfunk weitergeleitet. Dasselbe gilt auch für in dem Frequenzbereich für die funkgesteuerte Zentralverriegelung 110 abgestrahlten Notrufsignale. Werden die Notrufsignale von der Sendeeinrichtung 20 in dem Mobilfunknetz in der ersten Frequenzlage 30 abgestrahlt, so werden sie von der Mobilfunkeinrichtung 55 der dritten mobilen Station 10 empfangen und in der zweiten Frequenzlage 35 im selben Mobilfunknetz weitergeleitet. Das Notsignal ist vorteilhaft zu codieren, um Fehlalarme zu verhindern und die angemessene Hilfsmaßnahme bei einem Unfall, einer Panne, einem Überfall oder dergleichen einzuleiten. Durch die codierte Kennung des von der Sendeeinrichtung 20 abgestrahlten Notrufs wird die Erkennbarkeit gewährleistet, da dieser Code im entsprechenden Empfänger der zweiten und/oder der dritten mobilen Station 5 und 10 bekannt ist und durch entsprechende Algorithmen, zum Beispiel zur Durchführung von Korrelationsverfahren auch bei schwierigen Empfangssituationen, die beispielsweise durch Rauschen und/oder Mehrwegeausbreitung gekennzeichnet sind, erkannt werden kann. Wird der Notruf von der Sendeeinrichtung 20 der ersten mobilen Station 1 digital moduliert abgestrahlt, beispielsweise nach einem orthogonalen Frequenzmultiplex-(OFDM-)Verfahren, so wird die Kennzeichnung des Notrufs erheblich vereinfacht und die Störempfindlichkeit massiv reduziert. Durch Messung des Stehwellenfeldes bei der ersten mobilen Station 1 kann die Sendeleistung der Sendeantenne 45 der Sendeeinrichtung 20 kontrolliert werden. Sinkt die Sendeleistung unter einen vorgegebenen Wert, beispielsweise durch Beschädigung der Sendeantenne 45, so wird eine Hilfsantenne automatisch an die Sendeeinrichtung 20 angekoppelt, so dass zumindest ein Notruf mit schwacher Leistung abgestrahlt werden kann. Besonders hilfreich beim Absetzen eines Notrufs ist die gleichzeitige Übermittlung einer Positionsangabe. Zur Ortung der beispielsweise verunfallten ersten mobilen Station 1 muss eine wenigstens ungefähre Angabe entweder dieser oder der als Relais-Station dienenden zweiten und/oder dritten mobilen Station 5 und 10 gemacht werden. Das bedingt eine Kopplung der Sendeeinrichtung 20 und/oder des entsprechenden Empfängers der zweiten und dritten mobilen Station 5 und 10 mit einem Ortungssystem, beispielsweise einem GPS-Empfänger. In Figur 2 weist die Empfangseinrichtung 50 des Rundfunk empfängers 70 das Ortungssystem 75 auf. Ist die den Notruf aussendende erste mobile Station 1 aufgrund einer Beschädigung oder des Nichtvorhandenseins eines Ortungssystems nicht in der Lage, ihre Position mit dem Notruf abzustrahlen, so wird bei der Weiterleitung des Notrufs durch die zweite und/oder dritte mobile Station 5 und 10 die Position der zweiten und/oder dritten mobilen Station 5 und 10 mit den weitergeleiteten Funksignalen abgestrahlt, wenn die zweite und/oder dritte mobile Station 5 und 10 über ein Ortungssystem wie zum Beispiel das Ortungssystem 75 der Empfangseinrichtung 50 des Rundfunkempfängers 70 verfügt. Da sich die zweite und/oder dritte mobile Station 5 und 10 in der Nähe der ersten mobilen Station 1 befmdet, kann zumindest die ungefähre Position der ersten mobilen Station 1 an die Zentrale 15 weitergeleitet werden. Als ungefähre Positionsbestimmung kann bei der Weiterleitung des Notrufs durch die zweite und/oder dritte mobile Station 5 und 10 auch die Zellenstruktur des Mobilfunknetzes benutzt werden. Dabei kann die Funkzelle 100 von der Mobilfunkeinrichtung 55 durch Datenaustausch mit der Feststation 115 selbst ermittelt werden. Eine Ermittlung des ungefähren Aufenthaltsortes der zweiten und/oder dritten mobilen Station 5 und 10 innerhalb der Funkzelle 100 kann durch die jeweilige Mobilfunkeinrichtung 55 auch dadurch realisiert werden, dass sie von der Feststation 115 ausgesandte Feldstärkeinformationen gemäß dem Verfahren aus der Druckschrift EP 0 290 725 B1 auswertet. Zur Ortsbestimmung wird im entsprechend ausgerüsteten Fahrzeug der momentane Standort laufend ermittelt und abgespeichert und entweder gleich von der verunfallten ersten mobilen Station 1 mit dem Notruf oder von der empfangenden zweiten und/oder dritten mobilen Station 5 und 10 mit dem weitergeleiteten Hilferuf ausgesendet. Dies kann auch mit der Uhrzeit des Empfangs im entsprechenden Empfänger der zweiten und/oder dritten mobilen Station 5 und 10 geschehen. Sollte beim ersten Sendeversuch der zweiten und/oder dritten mobilen Station 5 und 10 kein Erfolg erzielt werden, wird eine gewisse Anzahl von Wiederholungen gesendet oder so lange gesendet, bis die entsprechende Empfangseinrichtung der zweiten und/oder dritten mobilen Station 5 und 10 ein Quittierungssignal von der Zentrale 15 detektiert. Dazu ist die Zentrale 15 mit einem entsprechenden Sender verbunden, wobei die Empfangsanlage 25 auch eine Sende-/Empfangsanlage sein kann.

Die Sendeeinrichtung 20 strahlt den Notruf auf einer speziellen vereinbarten Frequenz und/oder breitbandig, zum Beispiel gewobbelt über einen großen Frequenzbereich zum Beispiel dem UKW-Rundfunkfrequenzbereich und/oder dem Frequenzbereich für die funkgesteuerte Zentralverriegelung 110 ab. Die speziell vereinbarte Frequenz liegt dabei in einem sogenannten Notkanal. Weist die Empfangseinrichtung 50 für Rundfunkempfang gemäß Figur 2 nur den Rundfunkempfänger 70 auf, so schaltet der Rundfunkempfänger 70 periodisch von dem gerade eingestellten Rundfunkempfangskanal auf den Notkanal um, wobei er den Notkanal nach Notrufen abtastet. Wechselt der Rundfunkempfänger 70 nicht periodisch auf den Notkanal, so kann dennoch der breitbandig im Rund funkfrequenzbereich abgestrahlte Notruf auch im gerade eingestellten Rundfunkempfangskanal empfangen werden. Dabei hängt die Erkennung des Notrufs in diesem Fall von der Feldstärke der Notruffunksignale und der Feldstärke der empfangenen Rundfunksignale ab, wobei die Feldstärke der empfangenen Rundfunksignale im Vergleich zu der Feldstärke der Notruffunksignale nicht zu hoch sein darf. Damit auch bei vergleichsweise hoher Rundfunkfeldstärke die Notrufsignale noch empfangen werden können, könnten die Rundfunksender in regelmäßigen Zeitabschnitten ihre Abstrahlleistung entsprechend senken oder unterbrechen. Aufgrund der Codierung der Notruffunksignale werden diese als solche detektiert. Eine komfortablere Lösung für die Empfangseinrichtung 50 für Rundfunkempfang besteht darin, neben dem Rundfunkempfänger 70 einen zweiten Rundfunkempfänger 71 vorzusehen. Dabei werden dem zweiten Rundfunkempfänger 71 über die Frequenzweiche 120 nur Rundfunksignale eines eingestellten Rundfunkkanals zugeführt, das heißt er springt nicht auf den Notrufkanal. Der erste Rundfunkempfänger 70 hingegen sucht einen Kanal mit besserem Rundfunkempfang und trifft dabei auch auf den Notrufkanal, wo er gegebenenfalls Notruffunksignale detektiert.

Die in dem Frequenzbereich für die funkgesteuerte Zentralverriegelung 110 abgestrahlten Notrufsignale werden von der funkgesteuerten Zentralverriegelung 110 durch ihre Codierung erkannt. Durch die Codierung wird außerdem verhindert, dass fälschlicherweise die Zentralverriegelung betätigt wird. Dies kann auch dadurch verhindert werden, dass bei bewegter mobiler Station 5 bzw. 10 generell ein Schließen der Zentralverriegelung verhindert wird, so dass bei bewegtem Fahrzeug empfangene Notruffunksignale diesbezüglich unschädlich sind. Eine Verbesserung der Unterscheidung zwischen Notrufsignalen und Zentralverriegelungssignalen in der Zentralverriegelung kann auch dadurch erreicht werden, dass sowohl die Notrufsignale als auch die Zentralverriegelungssignale mit einem unterschiedlichen Code codiert sind. Über das Mobilfunknetz abgestrahlte Notrufsignale der Sendeeinrichtung 20 können auch vom Mobilfunkempfänger 105 der Mobilfunkeinrichtung 55 aufgrund ihrer Codierung und/oder Frequenzlage detektiert werden. Dabei trennt die Antennenweiche 125 die vom Sender 85 über die Sende-/Empfangsantenne 80 abzustrahlenden von den durch die Sende-/Empfangsantenne 80 empfangenen Signalen. Dazu müssen sich die erste Frequenzlage 30 der empfangenen Notrufsignale von der zweiten Frequenzlage 35 der von der Mobilfunkeinrichtung 55 weiterzuleitenden Notrufsignale unterscheiden. Die von dem Rundfunkempfänger 70 und/oder der funkgesteuerten Zentralverriegelung 110 empfangenen Notrufsignale werden über jeweils eine Datenleitung 60 dem Codierer 95 der Mobilfunkeinrichtung 55 zugeführt. Im Codierer 95 werden codierte Funksignale zur Weiterleitung über die Feststation 115 an die Empfangsanlage 25 der Zentrale 15 erzeugt und an den Sender 85 weitergeleitet. Vom Sender 85 werden die weiterzuleitenden Funksignale in die zweite Frequenzlage 35 umgesetzt und über die Antennenweiche 125 und die Sende-/Empfangs-antenne 80 abgestrahlt. Wenn den von dem Rundfunkempfänger 70 empfangenen Notrufsignalen keine Positionsbestimmung beigefügt ist, wird dies dem an den Rundfunkempfänger 70 angeschlossenen Ortungssystem 75 mitgeteilt, so dass das Ortungssystem 75 seine ermittelte Position an den Rundfunkempfänger 70 abgibt, wo diese Ortsinformation zusammen mit dem Notruf zu dem weiterzuleitenden Notruffunksignal kombiniert und an den Codierer 95 zur Codierung abgegeben wird. Werden vom Mobilfunkempfänger 105 Notrufsignale über die Sende/Empfangsantenne 80 und die Antennenweiche 125 empfangen, so werden sie im Mobilfunkempfänger 105 decodiert und an den Codierer 95 abgegeben. Im Codierer 95 werden die Notrufsignale neu codiert und in der beschriebenen Weise nach Weiterleitung an den Sender 85 von diesem über die Sende-/Empfangsantenne 80 in der zweiten Frequenzlage 35 abgestrahlt. Vor der Weiterleitung der Notrufsignale vom Rundfunkempfänger 70 und von der funkgesteuerten Zentralverriegelung 110 werden die Notruf signale im Rundfunkempfänger 70 bzw. in der funkgesteuerten Zentralverriegelung 110 ebenfalls decodiert, so dass im Codierer 95 immer eine Neucodierung stattfindet. In einem weiteren Ausführungsbeispiel kann die Mobilfunkeinrichtung 55 in die Empfangseinrichtung 50 integriert sein, so dass die Empfangseinrichtung 50 beispielsweise ein Autoradio mit integrierter Mobilfunkeinrichtung darstellt.

In Figur 5 ist ein Ablaufdiagramm für die Detektion und Verarbeitung von in dem Rund funkempfänger 70 empfangenen Notruffunksignalen der Sendeeinrichtung 20 dargestellt. Vorausgesetzt ist bei diesem Ablaufplan, dass in der Empfangseinrichtung 50 nur ein Rundfunkempfänger 70 vorhanden ist, der periodisch einen Notrufkanal nach Notruffunksignalen abtastet. Bei Programmpunkt 200 wird zunächst geprüft, ob der Rundfunkempfänger eingeschaltet ist. Ist dies der Fall, so wird zu Programmpunkt 205 verzweigt, andernfalls wird zu Programmpunkt 250 verzweigt. Bei Programmpunkt 250 wird ein Stromsparmodus eingeschaltet. Anschließend wird zu Programmpunkt 255 verzweigt, bei dem für einen Timer ein vergleichsweise großes Zeitintervall vorgegeben wird. Bei Programmpunkt 205 wird für den Timer ein vergleichsweise kleines Zeitintervall vorgegeben. Sowohl von Programmpunkt 205 als auch von Programmpunkt 255 wird auf den Programmpunkt 210 verzweigt, bei dem ein timergesteuertes Umschalten auf den Notrufkanal stattfindet. Dabei wird periodisch immer nach Ablauf des eingestellten Zeitintervalls auf den Notrufkanal umgeschaltet. Bei Programmpunkt 215 wird geprüft, ob auf dem Notrufkanal ein Notruf vorliegt. Ist dies der Fall, so wird zu Programmpunkt 220 verzweigt, andernfalls wird zu Programmpunkt 260 verzweigt. Bei Programmpunkt 260 wird auf Rundfunkempfang zurückgeschaltet. Anschließend wird wieder zu Programmpunkt 210 verzweigt. Bei Programmpunkt 220 wird der detektierte Notruf decodiert. Bei Programmpunkt 225 wird geprüft, ob in dem decodierten Notruf eine Positionsangabe enthalten ist. Ist dies der Fall, so wird zu Programmpunkt 230 verzweigt, andernfalls wird zu Programmpunkt 265 verzweigt. Bei Programmpunkt 265 wird geprüft, ob die eigene Position bekannt ist, das heißt, ob an den Rundfunkempfänger 70 ein Ortungssystem 75 angeschlossen ist und wenn dies der Fall ist, ob in dem Ortungssystem 75 die aktuelle Position gespeichert ist. Ist dies der Fall, so wird zu Programmpunkt 270 verzweigt, andernfalls wird zu Programmpunkt 230 verzweigt. Bei Programmpunkt 270 wird das Ortungssystem 75 vom Rundfunkempfänger 70 veranlasst, die Positionsangabe an den Rundfunkempfänger 70 abzugeben. Von Programmpunkt 270 wird ebenfalls zu Programmpunkt 230 verzweigt. Bei Programmpunkt 230 wird der aktuelle Zeitpunkt ermittelt. Bei Programmpunkt 235 wird der Notruf, der ermittelte Zeitpunkt und, falls bekannt, die Position gespeichert. Bei Programmpunkt 240 werden die gespeicherten Daten an den Codierer 95 der Mobilfunkeinrichtung 55 abgegeben. Der bei Programmpunkt 240 an die Mobilfunkeinrichtung 55 abgegebene Notruf mit Zeit- und, falls bekannt, Positionsangabe, wird nach erneuter Codierung und Umsetzung in die zweite Frequenzlage 35 von der Mobilfunkeinrichtung 55 abgestrahlt. Bei Programmpunkt 245 wird geprüft, ob der Rundfunkempfänger 70 auf dem Notkanal ein Quittierungssignal von der Zentrale 15 detektiert hat. Ist dies der Fall, so wird zu Programmpunkt 210 verzweigt, andernfalls wird zu Programmpunkt 240 verzweigt.

In Figur 6 wird der Ablaufplan für den Empfang und die Verarbeitung von Notrufsignalen durch die funkgesteuerte Zentralverriegelung 110 dargestellt. Bei Programmpunkt 300 wird geprüft, ob ein Funksignal empfangen wurde. Ist dies der Fall, so wird zu Programmpunkt 305 verzweigt, andernfalls wird zu Programmpunkt 300 zurückverzweigt. Bei Programmpunkt 305 wird aufgrund der Codierung geprüft, ob es sich bei dem empfangenen Signal um ein Zentralverriegelungssignal handelt. Ist dies der Fall, so wird zu Programmpunkt 330 verzweigt, andernfalls wird zu Programmpunkt 310 verzweigt. Bei Programmpunkt 330 wird das Fahrzeug bzw. die mobile Station je nach empfangenem Zentralverriegelungssignal entsichert oder gesichert. Anschließend wird zu Programmpunkt 300 verzweigt. Bei Programmpunkt 310 wird aufgrund der Codierung geprüft, ob es sich bei dem empfangenen Signal um ein Notrufsignal handelt. Ist dies der Fall, so wird zu Programmpunkt 315 verzweigt, andernfalls wird zu Programmpunkt 300 verzweigt. Bei Programmpunkt 315 wird die aktuelle Zeit ermittelt. Bei Programmpunkt 320 wird das Notrufsignal decodiert. Bei Programmpunkt 325 wird das decodierte Notrufsignal mit der ermittelten Zeit an die Mobilfunkeinrichtung 55 abgegeben. Eine Positionsbestimmung findet dann durch die Mobilfunkeinrichtung 55 statt, ebenfalls eine Speicherung des Notrufs, der ermittelten Zeit und Position. Der so aufbereitete Notruf wird dann von der Mobilfunkeinrichtung 55 solange abgestrahlt, bis ein entsprechendes Quittierungssignal von der Zentrale 15 in der funkgesteuerten Zentralverriegelung 110 detektiert und an die Mobilfunkeinrichtung 55 weitergeleitet oder vom Mobilfunkempfänger 105 in der ersten Frequenzlage 30 detektiert wird.

Die Detektion von Notrufsignalen durch den Mobilfunkempfänger 105 der Mobilfunkeinrichtung 55 erfolgt durch Abtasten der ersten Frequenzlage 30 durch den Mobilfunkempfänger 105 zu vorgegebenen Zeiten, so dass der Ablauf des Empfangs und der Verarbeitung von durch die Mobilfunkeinrichtung 55 empfangenen Notrufsignalen analog dem Ablaufplan von Figur 5 stattfindet. Die Position wird dabei wie bereits beschrieben durch die Mobilfunkeinrichtung 55 selbst ermittelt.

In einem weiteren Ausführungsbeispiel gemäß Figur 4 weist die erste mobile Station 1 einen mit der Sendeeinrichtung 20 verbundenen Empfänger 135 auf, der an eine Empfangsantenne 130 angeschlossen ist. Außerdem ist eine Leitzentrale 40 mit einer Sendeanlage 41 vorgesehen, die Funksignale zur ersten mobilen Station 1 abstrahlt. Auf diese Weise kann die Sendeeinrichtung 20 durch die Leitzentrale 40 zur Abstrahlung von Funksignalen aktiviert werden. Dies ist besonders zur Erkennung und zum Aufspüren gestohlener Fahrzeuge geeignet, da ein gestohlenes Fahrzeug zur Abstrahlung seiner Position aktiviert werden kann.

In jedem Fall werden die von der Empfangsanlage 25 an dem zentralen Punkt empfangenen Notrufsignale von der Zentrale 15 nach ihrem Informationsgehalt untersucht, so dass in der Zentrale 15 in Abhängigkeit des ermittelten Informationsgehalts entsprechende Hilfsmaßnahmen eingeleitet werden können.

## Patentansprüche

1. Rundfunkempfangseinrichtung (50), insbesondere Fahrzeugempfänger, **dadurch gekennzeichnet, dass** ein mit einer Empfangsantenne (65) verbundener Empfänger (70) vorhanden ist, der zur Abtastung mindestens eines Rundfunkfrequenzbereiches nach Funksignalen zu vorgegebenen Zeiten und zur Detektion von empfangenen, codierten und/oder digital modulierten Funksignalen eines Notrufs ausgebildet ist und zur Ausgabe weiterer Funksignalemittels einer mit der Rundfunkempfangseinrichtung (50) über eine Datenleitung (60) verbundenen Mobilfunkeinrichtung (55) ausgebildet ist, wobei die Funksignale die Informationen der empfangenen Funksignale enthalten.

2. Rundfunkempfangseinrichtung (50) nach Anspruch 1, **dadurch gekennzeichnet, dass** der Empfänger (70) zur Abtastung eines vorgegebenen Kanals des Rundfunkfrequenzbandes zu vorgegebenen Zeiten ausgebildet ist.

3. Rundfunkempfangseinrichtung (50) nach einem der Ansprüche 1 oder 2, **dadurch gekennzeichnet, dass** ein Ortungssystem (75) im Bereich der Rundfunkempfangseinrichtung (50) vorgesehen ist und dass das Ortungssystem (75) zur Abgabe der Position der Rundfunkempfangseinrichtung (50) ausgebildet ist, wenn das empfangene Funksignal keine Positionsangabe enthält.

4. Rundfunkempfangseinrichtung (50) nach Anspruch 1, 2 oder 3, **dadurch gekennzeichnet, dass** der Empfänger (70) dazu ausgebildet ist, die weiteren Funksignale zu vorgegebenen Zeiten so lange auszugeben, bis der Empfänger (70) ein Quittierungssignal detektiert.

5. Mobilfunkeinrichtung (55), **dadurch gekennzeichnet, dass** eine mit der Mobilfunkeinrichtung (55) über eine Datenleitung (60) verbundene Empfangseinrichtung (50) zum Empfang von Funksignalen eine funkgesteuerte Zentralverriegelung (110) eines Fahrzeuges ist, die zur Erkennung der Funksignale an einer Codierung der Funksignale ausgebildet ist, und dass die Mobilfunkeinrichtung (55) beim Empfang und/oder Erhalt eines codierten und/oder digital modulierten Funksignals eines Notrufs mittels der Zentralverriegelung (110) zur Abstrahlung der in dem Funksignal enthaltenen Informationen ausgebildet ist.

6. Mobilfunkeinrichtung (55) nach Anspruch 5, **dadurch gekennzeichnet, dass** die Mobilfunkeinrichtung (55) zusammen mit den Informationen der empfangenen Funksignale zur Abstrahlung einer Positionsangabeausgebildet ist, die die Funkzelle (100) kennzeichnet, in der sich die Mobilfunkeinrichtung (55) befindet.

7. Mobilfunkeinrichtung (55) nach Anspruch 5 bis 6, **dadurch gekennzeichnet, dass** die Mobilfunkeinrichtung (55) dazu ausgebildet ist, die Informationen der empfangenen Funksignale zu vorgegebenen Zeiten so lange abzustrahlen, bis sie ein Quittierungssignal detektiert.

## Claims

1. Broadcast radio reception device (50), in particular vehicle receiver, **characterized in that** a receiver (70) connected to a reception antenna (65) is existent that is designed to scan at least one broadcast radio frequency range for radio signals at prescribed times and to detect received, coded and/or digitally modulated radio signals for an emergency call and is designed to output further radio signals by means of a mobile radio device (55) connected to the broadcast radio reception device (50) via a data line (60), wherein the radio signals contain the information in the received radio signals.

2. Broadcast radio reception device (50) according to Claim 1, **characterized in that** the receiver (70) is designed to scan a prescribed channel of the broadcast radio frequency band at prescribed times.

3. Broadcast radio reception device (50) according to either of Claims 1 and 2, **characterized in that** a locating system (75) is provided in the region of the broadcast radio reception device (50) and **in that** the locating system (75) is designed to output the position of the broadcast radio reception device (50) when the received radio signal does not contain a position statement.

4. Broadcast radio reception device (50) according to Claim 1, 2 or 3, **characterized in that** the receiver (70) is designed to output the further radio signals at prescribed times until the receiver (70) detects an acknowledgement signal.

5. Mobile radio device (55), **characterized in that** a reception device (50) connected to the mobile radio device (55) via a data line (60) for the purpose of receiving radio signals is a radio-controlled central locking system (110) in a vehicle, which central locking system is designed to recognize the radio signals from coding of the radio signals, and **in that** the mobile radio device (55) is designed so that, upon receiving and/or obtaining a coded and/or digitally modulated radio signal from an emergency call by means of the central locking system (110), it emits the information contained in the radio signal.

6. Mobile radio device (55) according to Claim 5, **characterized in that** the mobile radio device (55) is designed to emit, together with the information in the received radio signals, a position statement that denotes the radio cell (100) that contains the mobile radio device (55).

7. Mobile radio device (55) according to Claims 5 and 6, **characterized in that** the mobile radio device (55) is designed to emit the information in the received radio signals at prescribed times until it detects an acknowledgement signal.

## Revendications

1. Dispositif (50) de réception radio, en particulier récepteur pour véhicule, **caractérisé en ce qu'**il présente un récepteur (70) raccordé à une antenne de réception (65) et configuré pour détecter des signaux radio dans au moins une plage de fréquence radio à des instants prédéterminés pour détecter les signaux radio reçus, codés et/ou modulés numériquement d'un message d'urgence et pour délivrer d'autres signaux radio au moyen d'un dispositif (55) de radiotéléphonie mobile raccordé par un conducteur (60) de données au dispositif (50) de réception radio, les signaux radio contenant les informations que contiennent les signaux radio reçus.

2. Dispositif (50) de réception radio selon la revendication 1, **caractérisé en ce que** le récepteur (70) est configuré pour examiner un canal prédéterminé de la bande de fréquence radio à des instants prédéterminés.

3. Dispositif (50) de réception radio selon l'une des revendications 1 ou 2, **caractérisé en ce qu'**un système de localisation (75) est prévu au niveau du dispositif (50) de réception radio et **en ce que** le système de localisation (75) est configuré pour délivrer la position du dispositif (50) de réception radio lorsque le signal radio reçu ne contient pas de données de position.

4. Dispositif (50) de réception radio selon les revendications 1, 2 ou 3, **caractérisé en ce que** le récepteur (70) est configuré pour délivrer les autres signaux radio à des instants prédéterminés jusqu'à ce que le récepteur (70) détecte un signal de fin d'émission.

5. Dispositif (55) de radiotéléphonie mobile, **caractérisé en ce qu'**il est un dispositif de réception (50) raccordé au dispositif (55) de radiotéléphonie mobile par l'intermédiaire d'un conducteur (60) de données et recevant des signaux radio d'un verrouillage central (110) commandé par radio d'un véhicule, qui est configuré pour détecter les signaux radio par le biais d'un codage des signaux radio et **en ce que** le dispositif (55) de radiotéléphonie mobile est configuré pour émettre au moyen du verrouillage central (110) les informations que contient le signal radio lorsqu'il reçoit et/ou réceptionne un signal radio d'un appel de secours, codé et/ou modulé numériquement.

6. Dispositif (55) de radiotéléphonie mobile selon la revendication 5, **caractérisé en ce que** le dispositif (55) de radiotéléphonie mobile est configuré pour émettre une donnée de position en même temps que les informations des signaux radio reçus pour caractériser la cellule radio (100) dans laquelle se trouve le dispositif (55) de radiotéléphonie mobile.

7. Dispositif (55) de radiotéléphonie mobile selon les revendications 5 et 6, **caractérisé en ce que** le dispositif (55) de radiotéléphonie mobile est configuré pour émettre les informations des signaux radio reçus à des instants prédéterminés jusqu'à ce qu'il détecte un signal de fin d'émission.
